# EUROPEAN PATENT APPLICATION

(11) **EP 4 647 946 A1**
(43) Date of publication of application: **12.11.2025**
(21) Application number: 25159347.1
(22) Date of filing: 21.02.2025
(51) Int. Cl.: G06F 21/32, H04W 12/06, H04W 12/08, A61J 3/10, A61B 5/1171

(54) **MANAGEMENT SYSTEM FOR MOLDED PRODUCT PRODUCTION SITE**

(30) Priority: 07.05.2024 JP 2024075346
(71) Applicant: Kikusui Seisakusho Ltd., Nakagyo-ku Kyoto-shi Kyoto 604-8483 (JP)
(72) Inventor: SUZUKI, Hiroshi, Kyoto-shi, Kyoto 604-8483 (JP); FUJII, Syuhei, Kyoto-shi, Kyoto 604-8483 (JP)
(74) Representative: TBK

(57) **Abstract**

A system including a common authentication information registration server 0 configured to store registered authentication information used for access control, the authentication information to be collated with information unique to each operator 4 possibly operating any of a plurality of machines 11, 21, and 31 or possibly entering any of a plurality of rooms 1, 2, and 3 accommodating the machines 11, 21, and 31, input accepters 121, 221, 321, 101, 201, and 301 installed at the machines 11, 21, and 31 or entrances of the rooms 1, 2, and 3 and configured to accept input of the information unique to the operator 4 from the operator 4 intending to operate the machine 11, 21, or 31 or intending to enter the room 1, 2, or 3, and controllers 12, 22, 32, 10, 20, and 30 configured to allow or prohibit operation of the machine 11, 21, or 31 or entry to the room 1, 2, or 3 by the operator 4 in accordance with a result of determination of whether the operator 4 has authority by collation of the information unique to the operator 4 thus accepted with the authentication information registered in the authentication information registration server 0.

## Description

### Field of the Invention

The exemplary invention relates to a system achieving access control to a plurality of machines on a production site for molded products from a powdery material, or a plurality of rooms accommodating the machines.

### Background of the Invention

Widely executed is mass production of pharmaceutical tablets (solid dosages), food products, electronic components, or the like by molding a powdery material into a desired shape. Specific examples of a machine used for production of a molded product include a molding machine (or a tableting machine) configured to compress a powdery material to obtain a molded product, as well as a mixing machine configured to mix a plurality of types of powdery materials as a material for a molded product, a granulator or a particle size selector configured to crush and granulate a material to have a desired particle diameter, a powdery material remover configured to remove a powdery material adhering to a surface of a molded product, a detector configured to detect any metal piece, human hair, or other foreign matter erroneously mixed into a molded product, a printer or an engraving machine configured to print or engrave on a surface of a molded product, a measuring machine configured to inspect at least one of characteristics such as weight, thickness, density, hardness, outer appearance, and composition of a molded product, and a wrapping machine configured to wrap a molded product (see JP 2023-101294 A, JP 2023-129019 A, JP 2024-015861 A, and the like).

As mentioned above, a plurality of types and a plural number of machines are used on a molded product production site. Some of these machines may be directly connected, whereas the machines are often separately disposed in separate rooms.

Each of the machines is accompanied by a controller configured to execute authentication of checking whether an operator intending to operate the machine has proper authority, similarly to typical personal computers and the like. In addition, a door at an entrance of a room accommodating the machine may be locked and room access may be controlled to allow only an operator having proper authority to unlock the door to enter the room. Authentication typically includes causing an operator to manually input an individual identifier (ID) and a password of the operator which only the operator having authority knows, or reading information unique to an operator from an ID card possessed by only the operator having authority.

In order to achieve a function of authentication processing, authentication information (a so-called password file) to be collated with a set of the ID and the password manually inputted or the information in the ID card needs to be registered in the controller for each of the installed machines or a controller configured to lock and unlock each of the rooms. It is actually troublesome to register authentication information for each of the machines or each of the rooms.

On the molded product production site, a working operator often wears equipment for protection or for maintenance of hygiene and cleanliness such as a protective suit, gloves, a mask, goggles, or a cap in order to protect the operator (e.g., a principal agent component in an anticancer drug is harmful to human beings), or to prevent any foreign matter from entering a molded product. It is troublesome to manually input the ID and the password in front of each machine or each room in such a state. Items carried by the operator is desirably limited to a bare minimum, and the ID card is also desirably eliminated.

### Summary of the Invention

The invention provides a management system used on a molded product production site equipped with a plurality of machines or including a plurality of rooms. The management system is configured to facilitate authentication of an operator intending to operate any of the machines or intending to enter any of the rooms.

The invention has achieved a management system for a molded product production site configured to achieve access control to a plurality of machines used to produce a molded product from a powdery material (an aggregate of minute solids inclusive of an aggregate of particles such as so-called granules and an aggregate of powder smaller than such particles, a mixture of a plurality of types of powdery materials also corresponding to a powdery material), or a plurality of rooms accommodating the machines used to produce a molded product from a powdery material, the system including: a common authentication information registration server configured to store registered authentication information used for access control to the plurality of machines or the plurality of rooms, the authentication information to be collated with information unique to each of a plurality of operators possibly operating any of the machines or possibly entering any of the rooms; input accepters installed at the machines or entrances of the rooms and configured to accept input of information unique to the operator from the operator intending to operate the machine or the operator intending to enter the room; and controllers installed at the machines or the entrances of the rooms and configured to allow or prohibit operation of the machine or entry to the room by the operator in accordance with a result of determination of whether the operator has authority to operate the machine or authority to enter the room by collation of the information unique to the operator thus accepted by the input accepter with the authentication information registered in the common authentication information registration server. In such a configuration, the common authentication information registration server stores the registered authentication information on the operators working on the molded product production site to achieve setting of access authority to the plurality of machines or the plurality of rooms on the production site and to allow each of the operators to operate a target machine or enter a target room in accordance with authority given to the operator. The configuration eliminates troublesome registration of authentication information individually to the controller of each of the machines and a controller configured to lock and unlock the entrance of each of the rooms.

An operator working on a molded product production site often wears equipment for protection or maintenance of hygiene and cleanliness. It is troublesome to manually input an ID and a password in front of each machine or each room in such a state. It is also desired to release the operator from always carrying an ID card. In view of this, in the management system, for each of the plurality of operators possibly operating any of the machines or possibly entering any of the rooms, the common authentication information registration server stores the registered authentication information used for access control to the plurality of machines or the plurality of rooms, the authentication information to be collated with biometrics information (information on part of a human body or an equivalent element such as an iris, a retina, face appearance, a fingerprint, a palmprint, a vein pattern, a natural voice, or a voiceprint) as the information unique to the operator, each of the input accepters installed at the machines or the entrances of the rooms accepts input of the biometrics information on the operator from the operator intending to operate the machine or the operator intending to enter the room, and each of the controllers installed at the machines or the entrances of the rooms allows or prohibits operation of the machine or entry to the room by the operator in accordance with a result of determination of whether the operator has authority to operate the machine or authority to enter the room by collation of the biometrics information on the operator thus accepted by the input accepter with the authentication information registered in the common authentication information registration server. Such a configuration eliminates necessity to manual input of the ID and the password by the operator and also eliminates necessity to force the operator to always carry the ID card.

A working operator wearing gloves, a mask, or goggles has difficulty in biometrics authentication by means of a fingerprint, a palmprint, or a vein pattern. Furthermore, an operator may disperse a splash of saliva upon speaking to cause contamination, and thus desirably refrains from speaking. If the biometrics information used for authentication is obtained by reading, with use of an optical sensor, an iris, a retina, or part of a face including an eye of the operator, authority of the operator can be authenticated by the iris or the like readable through the goggles worn by the operator. Accordingly, the system is particularly suitable for the molded product production site.

In the management system according to the exemplary invention, preferably, the authentication information stored in the common authentication information registration server includes information to be collated with the information unique to the operator for determination of whether a target person is the operator, and at least one of a specification of the machine that the operator is allowed to operate, details of allowed operation of the machine that the operator is allowed to operate, or a specification of the room that the operator is allowed to enter, and each of the controllers installed at the machines or the entrances of the rooms controls at least one of allowance or prohibition of operation of the machine, details of allowed operation of the machine, or allowance or prohibition of entry to the room by the operator intending to operate the machine or the operator intending to enter the room. Such a configuration can embody a mode in which operators have different levels of operation authority for a machine (one operator is allowed to start and stop the target machine as well as is allowed to change setting of parameters of various conditions for operation of the machine, whereas another operator is allowed only to start and stop the target machine), and a mode in which operators have different rooms allowed to enter (one operator can enter all the rooms whereas another operator can enter only a specific one or plurality of rooms).

### Effects of the Invention

The exemplary invention can provide a management system used on a molded product production site equipped with a plurality of machines or including a plurality of rooms. The management system is configured to facilitate authentication of an operator intending to operate any of the machines or intending to enter any of the rooms.

### Brief description of the drawings

Fig. 1 is a schematic configuration diagram of a management system according to an exemplary embodiment of the exemplary invention.
Fig. 2 is a chart exemplifying details of authentication information registered in an authentication information registration server of the management system according to the exemplary embodiment.
Fig. 3 is a flowchart showing an exemplary procedure of authentication processing executed in the management system according to the exemplary embodiment.

### Description of the preferred embodiment

An exemplary embodiment of the exemplary invention will now be described with reference to the drawings. The exemplary embodiment provides a management system achieving access control to machines 11, 21, and 31 or rooms 1, 2, and 3 in a case where an operator 4 as a worker intends to operate any of the machines 11, 21, and 31 or enter any of the rooms 1, 2, and 3 accommodating the machines 11, 21, and 31 on a production site of pharmaceutical tablets, food products, electronic components, or the like through molding a powdery material into a desired shape.

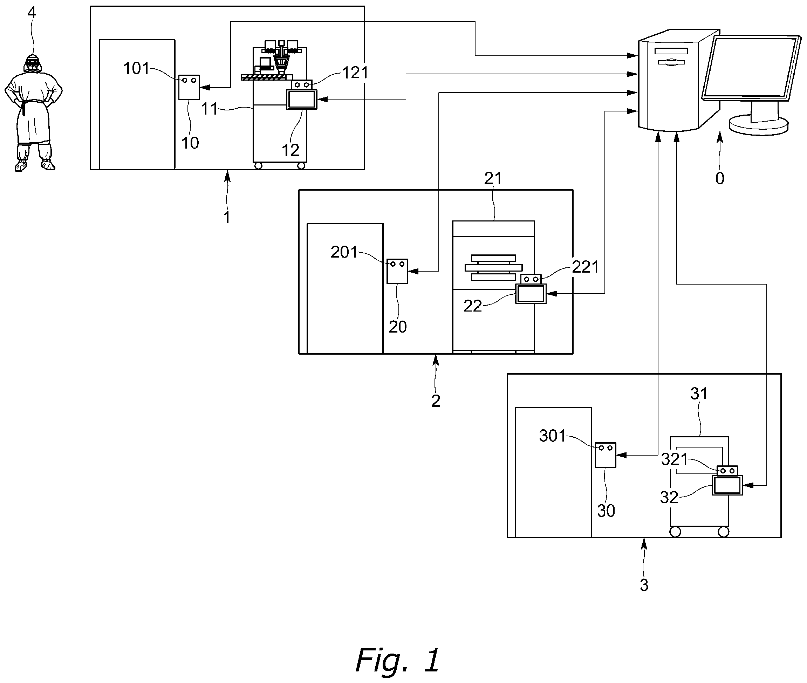

As shown exemplarily and schematically in Fig. 1, the molded product production site typically includes the plurality of rooms 1, 2, and 3 each accommodating a single or plurality of machines 11, 21, and 31 used for production of the molded product. Examples of the machine 11 configured to execute a process prior to molded product molding include a mixing machine configured to mix a plurality of types of powdery materials as a material for the molded product (a principal agent, an excipient, a lubricant, and the like for a pharmaceutical tablet), as well as a granulator or a particle size selector configured to crush and granulate a material for the molded product to have a desired particle diameter. Examples of the machine 21 as a molding machine configured to mold a raw powdery material to obtain a molded product include a rotary compression molding machine (tableting machine). The rotary compression molding machine includes a die table of a turret drilled to have a plurality of die bores aligned circumferentially, and an upper punch and a lower punch slidably retained above and below each of the die bores, and is configured to rotate the turret to horizontally turn the die bores in the die table and the punches together and compression mold a powdery material filled in the die bores when the paired upper and lower punches pass between an upper roll and a lower roll located at fixed positions. Examples of the machine 31 configured to apply post processing after molding to an obtained molded product include a powdery material remover configured to remove a powdery material adhering to a surface of the molded product, a detector configured to detect any metal piece, human hair, or other foreign matter erroneously mixed into the molded product, a printer or an engraving machine configured to print or engrave on a surface of a molded product, a measuring machine configured to inspect at least one of characteristics such as weight, thickness, density, hardness, outer appearance, and composition of a molded product, and a packing machine configured to pack a molded product.

The machines 11, 21, and 31 are accompanied by a controller 12 (accompanying the machine 11), a controller 22 (accompanying the machine 21), and a controller 32 (accompanying the machine 31) configured to control operation of the machines 11, 21, and 31. Examples of the controllers 12, 22, and 32 include a programmable logic controller, as well as a microcomputer system, a personal computer, and a work station each of which includes a processor, a memory, an auxiliary storage device (e.g., a nonvolatile flash memory or hard disk drive), an operation input device (e.g., a pointing device such as a touch panel, button, keyboard, or mouse which can be operated with a hand or a finger of the operator 4), an input/output interface (an interface for communication with the machines 11, 21, and 31, a device, an instrument, a computer 0, and the like which are disposed externally), and the like. Each of the controllers 12, 22, and 32 reads a program preliminarily stored in the auxiliary storage device into the processor via the memory, causes the processor to decode the program, and controls corresponding one of the machines 11, 21, and 31.

The rooms 1, 2, and 3 accommodating the machines 11, 21, and 31 have entrances that may be equipped with electronic locks or electric locks each configured to drive a dead bolt for locking or unlocking a door at corresponding one of the entrances, and controllers 10, 20, and 30 configured to control locking or unlocking the doors to control room access. The electronic locks or the electric locks and the controllers 10, 20, and 30 may have known configurations.

Typically, a plurality of operators 4 is allowed to enter the molded product production site. However, all the operators cannot necessarily operate all the machines 11, 21, and 31, and cannot necessarily enter all the rooms 1, 2, and 3. For example, one of the operators 4 can operate the machine 11, but cannot operate the remaining machines 21 and 31. Another one of the operators 4 can operate the different machine 21, but cannot operate the remaining machines 11 and 31. Still another one of the operators 4 may be able to operate all the machines 11, 21, and 31. The same applies to the rooms 1, 2, and 3. Each of the operators 4 may be allowed to enter any of the rooms 1, 2, and 3 and may not be allowed to enter the remaining rooms. Each of the operators 4 may have different access patterns.

Even with authority to operate any one of the machines 11, 21, and 31, the operators 4 may have different levels of operation authority to the target one of the machines 11, 21, and 31, that is, the operators 4 may have different details allowed to operate the target one of the machines 11, 21, and 31. For example, one of the operators 4 is allowed only to start and stop the target one of the machines 11, 21, and 31. Another one of the operators 4 is allowed to operate and stop the target one of the machines 11, 21, and 31, as well as is allowed to change setting of parameters of various operation conditions for operation of the target one of the machines 11, 21, and 31. Examples of the parameters of the operation conditions of the powdery material mixing machine 11 include a flow rate per unit time of a raw powdery material discharged from a feeder storing the raw powdery material, and rotational speed of an agitating rotor configured to agitate a powdery material. Examples of the parameters of the operation conditions of the rotary compression molding machine 21 include rotational speed of the turret, and tableting pressure of a punch compression molding a powdery material in a die bore. The parameters of the operation conditions influence quality of the molded product to be produced.

The controllers 12, 22, and 32 accompanying the machines 11, 21, and 31 installed on the molded product production site and the controllers 10, 20, and 30 accompanying the locks at the entrances of the rooms 1, 2, and 3 are connected respectively to input accepters 121, 221, 321, 101, 201, and 301 configured to accept input of information unique to the operator 4 intending to operate any of the machines 11, 21, and 31 or intending to enter any of the rooms 1, 2, and 3. Examples of the input accepters 121, 221, 321, 101, 201, and 301 include a reader configured to read biometrics information on the operator 4, particularly configured to read, with use of an optical sensor (including a camera equipped with a lens), an iris of a pupil, a retina of an eyeball, or part of a face including an eye of the operator 4. However, the input accepters 121, 221, 321, 101, 201, and 301 are not limited to this exemplification, and the examples may also include a sensor configured to read a fingerprint, a palmprint, a vein pattern, or the like of the operator 4, and a device configured to collect a natural voice of the operator 4 with use of a microphone and extract a characteristic (a voiceprint in some cases). The examples may further include a card reader configured to read information unique to the operator 4 recorded in an ID card possessed by the operator 4, a keyboard or an operation button configured to accept manual input of an ID and/or a password or a secret code number recognized only by the operator 4, and a microphone configured to accept audio input thereof.

The controllers 12, 22, and 32 accompanying the machines 11, 21, and 31 installed on the molded product production site and the controllers 10, 20, and 30 accompanying the locks at the entrances of the rooms 1, 2, and 3 are connected to an authentication information registration server 0 via an electric communication line such as a local area network (LAN). Examples of the authentication information registration server 0 include a programmable logic controller, as well as a microcomputer system, a personal computer, and a server computer each of which includes a processor, a memory, an auxiliary storage device, an operation input device, an input/output interface, and the like. The authentication information registration server 0 reads a program preliminarily stored in the auxiliary storage device into the processor via the memory, causes the processor to decode the program, and executes access control including user authentication processing to be described later. The authentication information registration server 0 may be constituted by a plurality of computers connected to be mutually communicable, and the plurality of computers may operate in cooperation to function as the authentication information registration server 0 in the management system.

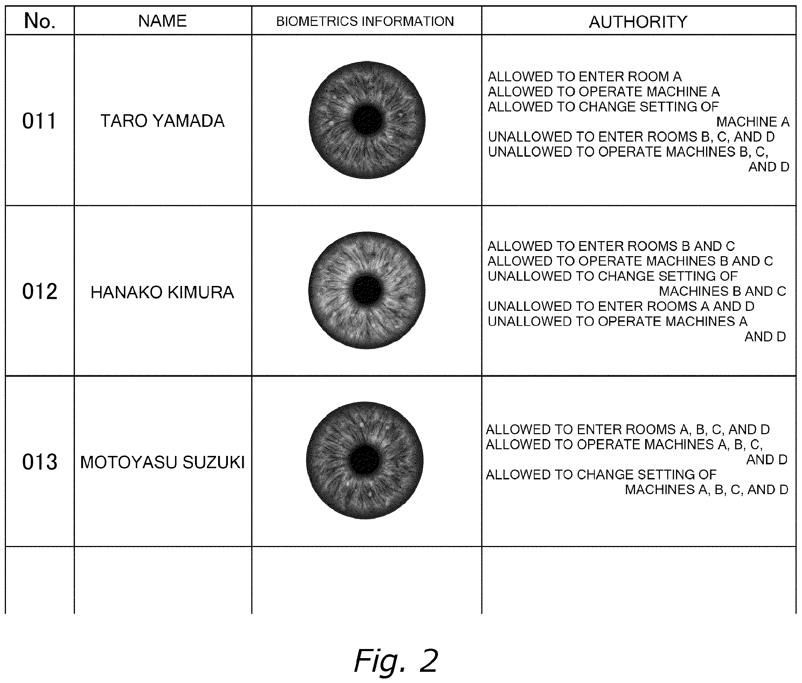

The authentication information registration server 0 receives registration of authentication information used for access control to each of the machines 11, 21, and 31 or the rooms 1, 2, and 3. The authentication information registration server 0 stores and retains the authentication information thus registered in a necessary storage region in a main memory or the auxiliary storage device. Fig. 2 exemplifies details of the authentication information. The authentication information includes information to be collated with the information unique to each of the operators 4 who enter to work on the molded product production site. The authentication information according to the exemplary embodiment includes information to be collated with the biometrics information such as an image or the like of an iris of a pupil, a retina of an eyeball, or part of a face including an eye of each of the operators 4. The operator 4 intending to operate any of the machines 11, 21, and 31 or intending to enter any of the rooms 1, 2, and 3 inputs the information unique to the operator 4, that is, the biometrics information such as an iris, a retina, or part of a face of the operator (imaged by a camera serving as the input accepter 121, 221, 321, 101, 201, or 301) to the input accepter 121, 221, 321, 101, 201, or 301 accompanying the machine 11, 21, or 31 or the room 1, 2, or 3 as a target. Collation between the image of the iris or the like of the operator 4 inputted to the input accepter 121, 221, 321, 101, 201, or 301 or a characteristic pattern extracted from the image and preliminarily registered information in the authentication information registration server 0 enables determination of who the operator 4 is and whether the operator 4 has authority to operate the machine 11, 21, or 31 or enter the room 1, 2, or 3. In the case where a fingerprint, a palmprint, a vein pattern, a natural voice (voiceprint), or the like of the operator 4 is inputted to the input accepters 121, 221, 321, 101, 201, and 301, information to be collated therewith is to be registered as authentication information in the authentication information registration server 0. The same applies to the case where the input accepters 121, 221, 321, 101, 201, and 301 are configured to read information recorded in an ID card possessed by the operator 4 or are configured to accept an ID, a password, a secret code number, or the like manually inputted by the operator 4.

The authentication information registered in the authentication information registration server 0 further includes authority prescribing information such as the operator 4 is allowed to operate which of the machines 11, 21, and 31 (conversely, is not allowed to operate which of the machines 11, 21, and 31), is allowed to execute which level of operation of the machine 11, 21, or 31 allowed to operate (e.g., allowed only to start and stop, or also allowed to input to set the parameters of the operation conditions of the machine 11, 21, or 31 to the controller 12, 22, or 32 or change the parameters), and is allowed to enter which of the rooms 1, 2, and 3 (is not allowed to enter which of the rooms 1, 2, and 3), for each of the operators 4 identified by the biometrics information (alternatively, information stored in the ID card, the ID and/or the password, the secret code number, or the like).

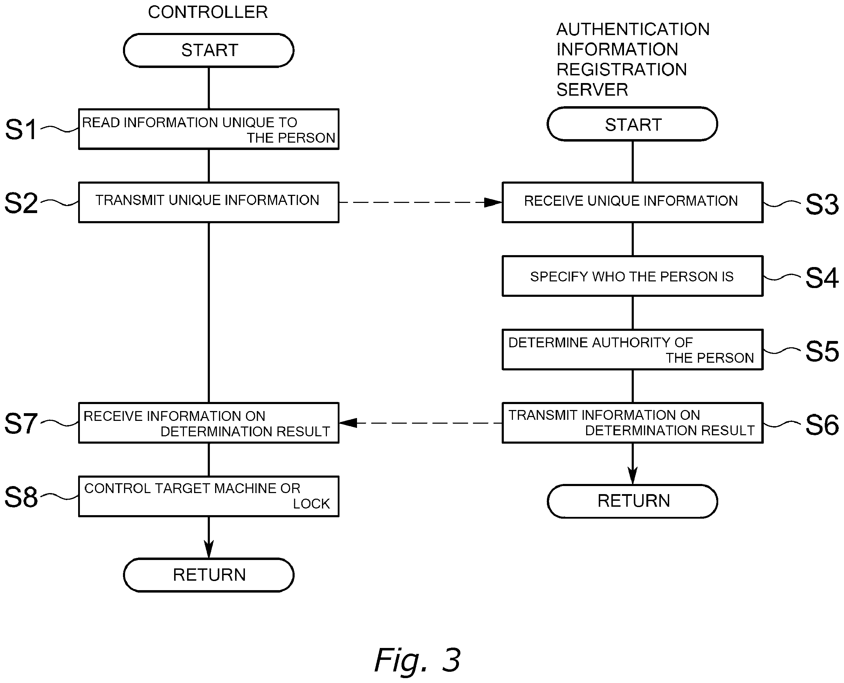

Fig. 3 shows a procedure of access control on a molded product production site. The operator 4 intending to operate any of the machines 11, 21, and 31 or intending to enter any of the rooms 1, 2, and 3 inputs information unique to the operator 4 to the input accepter 121, 221, or 321 accompanying the target machine 11, 21, or 31 or the input accepter 101, 201, or 301 accompanying the entrance of the room 1, 2, or 3 as an entry target (step S1). Examples of the information inputted to the input accepter 121, 221, 321, 101, 201, or 301 include the biometrics information (e.g., a captured image of an iris, a retina, or part of a face) on the operator 4.

The information unique to the operator 4 inputted to the input accepter 121, 221, 321, 101, 201, or 301 is sent to the controller 12, 22, 32, 10, 20, or 30 connected to the input accepter 121, 221, 321, 101, 201, or 301, and the controller 12, 22, 32, 10, 20, or 30 transmits, to the authentication information registration server 0, the information itself thus accepted, or characteristic information extracted from the accepted information (step S2). In this case, the controller 12, 22, 32, 10, 20, or 30 also transmits an identifier for identification of the controller 12, 22, 32, 10, 20, or 30, in other words, an identifier for identification of the machine 11, 21, or 31 that the operator 4 actually intends to operate or the room 1, 2, or 3 that the operator 4 actually intends to enter.

The authentication information registration server 0 receives the information unique to the operator 4 or the characteristic information extracted from the information inputted to the input accepter 121, 221, 321, 101, 201, or 301 along with the identifier for identification of the machine 11, 21, or 31 that the operator 4 intends to operate or the room 1, 2, or 3 that the operator intends to enter (step S3). The authentication information registration server 0 collates the information thus received with the authentication information stored and retained therein, to specify who the operator 4 is (step S4). The authentication information registration server 0 also refers to the information prescribing authority of the operator 4 and stored in connection with the operator 4 thus specified, and determines whether the operator 4 is allowed to operate the target machine 11, 21, or 31, which level of operation is allowed if allowed to operate the machine (e.g., allowed only to start and stop, or allowed to set or change the parameters of the operation conditions), or whether the operator is allowed to enter the target room 1, 2, or 3 (step S5). As already described, the authentication information registration server 0 receives the identifier for identification of the machine 11, 21, or 31 that the operator 4 actually intends to operate or the room 1, 2, or 3 that the operator actually intends to enter in step S3. In step S5, the authentication information registration server 0 compares the identifier with the information prescribing authority of the operator 4 and included in the authentication information. Obviously, the operator 4 having no registered authentication information (e.g., biometrics information) is not allowed to operate the machines 11, 21, and 31 or enter the rooms 1, 2, and 3.

The authentication information registration server 0 then returns information on a result of determination in step S5 to the controller 12, 22, 32, 10, 20, or 30 that transmitted the information in step S2 (step S6). The information returned in step S6 indicates whether to allow the operator 4 to operate the target machine 11, 21, or 31, which level of operation is allowed assuming that the operator is allowed to operate the machine, or whether to allow the operator 4 to enter the target room 1, 2, or 3.

The controller 12, 22, 32, 10, 20, or 30 having received the information on the result of determination returned from the authentication information registration server 0 (step S7) executes access control according to the information (step S8). That is, the operator 4 having authority to operate the target machine 11, 21, or 31 controlled by the controller 12, 22, or 32 is allowed to operate the machine 11, 21, or 31 (controlling the machine 11, 21, or 31 in accordance with operation by the operator 4 having accepted by the operation input device, inclusive of setting or changing the parameters of the operation conditions of the machine 11, 21, or 31). Otherwise, the operator 4 is prohibited from operating the machine 11, 21, or 31. If the operators 4 have different levels of operation authority to the target machine 11, 21, or 31, the operator 4 is allowed to execute operation at an allowed level, and operation at an unallowed level is unaccepted and prohibited. As to the operator 4 allowed only to start and stop the target machine 11, 21, or 31, operation to start or stop is accepted to accordingly control the target machine 11, 21, or 31, whereas unaccepted is setting or changing any of the parameters of the operation conditions of the machine 11, 21, or 31. As to the operator 4 allowed to set or change the parameters of the operation conditions, setting by the operator 4 of a parameter of an operation condition accepted by the operation input device is stored and retained in a main memory or the auxiliary storage device of the controller 12, 22, or 32 so as to be applied to subsequent control of the machine 11, 21, or 31.

As to the operator 4 having authority to enter the target room 1, 2, or 3 controlled by the controller 10, 20, or 30, the door at the entrance of the room 1, 2, or 3 is unlocked to allow entry of the operator 4. As to the operator 4 having no authority to enter the target room 1, 2, or 3, the door at the entrance of the room 1, 2, or 3 is kept locked to prohibit entry of the operator 4.

In order to achieve access control as described above, the authentication information including the information to be collated with the information (particularly biometrics information) unique to each of the operators 4 working on the production site, as well as the information prescribing authority to operate each of the machines 11, 21, and 31 and/or authority to enter each of the rooms 1, 2, and 3 on each of the operators 4 identified by the unique information is concentrated in the authentication information registration server 0. The authentication information on each of the operators 4 has only to be registered in the single authentication information registration server 0. There is no need to register the authentication information in each of the controllers 12, 22, and 32 (for each of the machines 11, 21, and 31) configured to control operation of the plurality of machines 11, 21, and 31. Furthermore, there is no need to register the authentication information in each of the controllers 10, 20, and 30 (for each of the rooms 1, 2, and 3) configured to lock and unlock the doors at the entrances of the plurality of rooms 1, 2, and 3.

The exemplary embodiment can facilitate achieving the management system used on the molded product production site equipped with the plurality of machines 11, 21, and 31 and/or including the plurality of rooms 1, 2, and 3. The management system is configured to execute authentication of the operator 4 intending to operate any of the machines 11, 21, and 31 and/or intending to enter any of the rooms 1, 2, and 3.

In particular, the operator 4 working on the molded product production site often wears equipment such as gloves, a mask, a cap, or goggles. If an iris, a retina, or part of a face including an eye of each of the operators 4 is read with use of the optical sensor 121, 221, 321, 101, 201, or 301 to obtain the information unique to the operator 4 to be used for authority authentication of the operator 4, the information is readable through the goggles worn by the operator 4. The management system is excellently suitable for the molded product production site in this case.

The exemplary invention is not limited to the exemplary embodiment detailed above. In the management system according to the above exemplary embodiment, when the operator 4 intends to operate any of the machines 11, 21, and 31 or intends to enter any of the rooms 1, 2, and 3, the input accepter 121, 221, 321, 101, 201, or 301 installed at the target machine 11, 21, or 31 or the target room 1, 2, or 3 accepts input of the information unique to the operator 4, and the authentication information registration server 0 determinates authentication through collating the information with the authentication information registered in the authentication information registration server 0.

In contrast, the controller 12, 22, 32, 10, 20, or 30 accompanying the target machine 11, 21, or 31 and/or the target room 1, 2, or 3 may alternatively be configured to determine authentication. More specifically, steps S2, S3, S6, and S7 in the procedure shown in Fig. 3 is eliminated, and steps S4 and S5 are executed not by the authentication information registration server 0 but by the controllers 12, 22, 32, 10, 20, and 30. In such a configuration, part of or the entirety of the authentication information registered in the authentication information registration server 0 is distributed to the controllers 12, 22, 32, 10, 20, and 30 accompanying the machines 11, 21, and 31 and/or the rooms 1, 2, and 3 via the electric communication line, to be stored and retained in the main memory or the auxiliary storage device of each of the controllers 12, 22, 32, 10, 20, and 30. In step S4, any of the controllers 12, 22, 32, 10, 20, and 30 obtains the information unique to the operator 4 or the characteristic information extracted from the information inputted to corresponding one of the input accepters 121, 221, 321, 101, 201, and 301 connected thereto, and collates the information with the authentication information stored and retained therein to specify who the operator 4 is. In step S5, the corresponding one of the controllers 12, 22, 32, 10, 20, and 30 also refers to the information prescribing authority of the operator 4 and stored in connection with the operator 4 thus specified, and determines whether the operator 4 is allowed to operate the target machine 11, 21, or 31, which level of operation is allowed if allowed to operate the machine, or whether the operator is allowed to enter the target room 1, 2, or 3. Then in step S8, the corresponding one of the controllers 12, 22, 32, 10, 20, and 30 executes access control in accordance with the result of determination in step S5. Also in this case, the authentication information on each of the operators 4 has only to be registered in the single authentication information registration server 0.

Moreover, specific configurations of the respective portions, the procedure of specific processing, and the like can be modified in various manners without departing from the spirit of the exemplary invention.

The exemplary invention has achieved a management system for a molded product production site configured to achieve access control to a plurality of machines used to produce a molded product from a powdery material (an aggregate of minute solids inclusive of an aggregate of particles such as so-called granules and an aggregate of powder smaller than such particles, a mixture of a plurality of types of powdery materials also corresponding to a powdery material), or a plurality of rooms accommodating the machines used to produce a molded product from a powdery material, the system including: a common authentication information registration server configured to store registered authentication information used for access control to the plurality of machines or the plurality of rooms, the authentication information to be collated with information unique to each of a plurality of operators possibly operating any of the machines or possibly entering any of the rooms; input accepters installed at the machines or entrances of the rooms and configured to accept input of information unique to the operator from the operator intending to operate the machine or the operator intending to enter the room; and controllers installed at the machines or the entrances of the rooms and configured to allow or prohibit operation of the machine or entry to the room by the operator in accordance with a result of determination of whether the operator has authority to operate the machine or authority to enter the room by collation of the information unique to the operator thus accepted by the input accepter with the authentication information registered in the common authentication information registration server.

## Claims

1. A management system for a molded product production site configured to achieve access control to a plurality of machines (11, 21, and 31) used to produce a molded product from a powdery material, or a plurality of rooms (1, 2, and 3) accommodating the machines (11, 21, and 31) used to produce a molded product from a powdery material, the management system comprising:
a common authentication information registration server (0) configured to store registered authentication information used for access control to the plurality of machines (11, 21, and 31) or the plurality of rooms (1, 2, and 3), wherein the authentication information is to be collated with information unique to each of a plurality of operators (4) possibly operating any of the machines (11, 21, and 31) or possibly entering any of the rooms (1, 2, and 3);
input accepters (121, 221, 321, 101, 201, and 301) installed at the machines (11, 21, and 31) or entrances of the rooms (1, 2, and 3) and configured to accept input of information unique to the operator (4) from the operator (4) intending to operate the machine (11, 21, or 31) or the operator (4) intending to enter the room (1, 2, or 3); and
controllers (12, 22, 32, 10, 20, and 30) installed at the machines (11, 21, and 31) or the entrances of the rooms (1, 2, and 3) and configured to allow or prohibit operation of the machine (11, 21, or 31) or entry to the room (1, 2, or 3) by the operator (4) in accordance with a result of determination of whether the operator (4) has authority to operate the machine (11, 21, or 31) or authority to enter the room (1, 2, or 3) by collation of the information unique to the operator (4) thus accepted by the input accepter with the authentication information registered in the common authentication information registration server (0).

2. The management system according to claim 1, wherein
for each of the plurality of operators (4) possibly operating any of the machines (11, 21, and 31) or possibly entering any of the rooms (1, 2, and 3), the common authentication information registration server (0) stores the registered authentication information used for access control to the plurality of machines (11, 21, and 31) or the plurality of rooms (1, 2, and 3), wherein the authentication information is to be collated with biometrics information as the information unique to the operator (4),
each of the input accepters (121, 221, 321, 101, 201, and 301) installed at the machines (11, 21, and 31) or the entrances of the rooms (1, 2, and 3) accepts input of the biometrics information on the operator from the operator (4) intending to operate the machine (11, 21, or 31) or the operator (4) intending to enter the room (1, 2, or 3), and
each of the controllers (12, 22, 32, 10, 20, and 30) installed at the machines (11, 21, and 31) or the entrances of the rooms (1, 2, and 3) allows or prohibits operation of the machine (11, 21, or 31) or entry to the room (1, 2, or 3) by the operator (4) in accordance with a result of determination of whether the operator (4) has authority to operate the machine (11, 21, or 31) or authority to enter the room (1, 2, or 3) by collation of the biometrics information on the operator (4) thus accepted by the input accepter (121, 221, 321, 101, 201, or 301) with the authentication information registered in the common authentication information registration server (0).

3. The management system according to claim 2, wherein the biometrics information is obtained by reading, with use of an optical sensor, an iris, a retina, or part of a face including an eye of the operator (4).

4. The management system according to claim 1, wherein
the authentication information stored in the common authentication information registration server (0) includes information to be collated with the information unique to the operator (4) for determination of whether a target person is the operator (4), and at least one of a specification of the machine (11, 21, or 31) that the operator (4) is allowed to operate, details of allowed operation of the machine (11, 21, or 31) that the operator (4) is allowed to operate, or a specification of the room (1, 2, or 3) that the operator is allowed to enter, and
each of the controllers (12, 22, 32, 10, 20, and 30) installed at the machines (11, 21, and 31) or the entrances of the rooms (1, 2, and 3) controls at least one of allowance or prohibition of operation of the machine (11, 21, or 31), details of allowed operation of the machine (11, 21, or 31), or allowance or prohibition of entry to the room (1, 2, or 3) by the operator (4) intending to operate the machine (11, 21, or 31) or the operator (4) intending to enter the room (1, 2, or 3).
